# EUROPÄISCHE PATENTSCHRIFT

(11) **EP 0 398 908 B1**
(45) Veröffentlichungstag und Bekanntmachung des Hinweises auf die Patenterteilung: **13.10.1993**
(21) Anmeldenummer: 89901463.3
(22) Anmeldetag: 24.01.1989
(51) Int. Cl.: H04B 15/00

(54) **ELEKTRONISCHES GERÄT**
ELECTRONIC APPLIANCE
APPAREIL ELECTRONIQUE

(30) Priorität: 30.01.1988 DE 3802822
(43) Veröffentlichungstag der Anmeldung: 28.11.1990
(73) Patentinhaber: ROBERT BOSCH GMBH, 70442 Stuttgart (DE)
(72) Erfinder: FIEDLER, Gerhard, D-7441 Neckartailfingen (DE); CONZELMANN, Gerhard, D-7022 Leinfelden-Oberaich (DE)
(86) Internationale Anmeldenummer: DE8900039
(87) Internationale Veröffentlichungsnummer: WO8907373

(56) Entgegenhaltungen:
- DE-A- 3 326 629
- DE-A- 3 406 671

## Beschreibung

### Stand der Technik

Die Erfindung betrifft ein elektronisches Gerät nach der Gattung des Anspruchs 1.

Derartige Geräte sind bereits bekannt, beispielsweise aus der US-A-4 668 87. Die signalverarbeitenden Schaltungsteile dieser Geräte können dabei zur Verarbeitung der Signale dienende elektronische Transformationsglieder wie Operationsverstärker, Komparatoren, als Pulsformer dienende Kippschaltungen, digital arbeitende Schaltungsteile oder dergleichen enthalten.

Die bekannten Geräte der eingangs genannten Art verwenden Siebschaltungen, die mit diskreten Komponenten in Leiterplattentechnik, aber auch schon in hybrider Bauweise auf keramischen Substraten aufgebaut sind. Mit derartigen Siebschaltungen lassen sich Störspannungen in beliebigem Maße dämpfen, sie sind deshalb grundsätzlich einsetzbar, wie beispielsweise auch in Kraftfahrzeugen, wo Störspannungen mit großer Amplitude in einem weiten Frequenzbereich etwa zwischen 150 KHz und 1 GHz zumindest immer dann auftreten, sobald sich das Kraftfahrzeug im Nahfeld eines leistungsstarken Senders bewegt.

Sollen ganze Systeme wenigstens als Teilsysteme monolithisch integriert werden, so bedeutet dies, daß auch die Siebschaltungen monolithisch zu integrieren sind. Dabei entsteht folgendes Problem: An den pn-Übergängen der Transformationsglieder, die zur Verarbeitung der Signale in den Signalverarbeitenden Schaltungsteilen dienen, entstehen Richtspannungen, die die Arbeitspunkte dieser Transformationsglieder verschieben, was zu Fehlfunktionen der signalverarbeitenden Schaltungsteile führt.

### Vorteile der Erfindung

Das erfindungsgemäße elektronische Gerät mit den kennzeichnenden Merkmalen des Hauptanspruchs hat demgegenüber den Vorteil, daß auch Störspannungen mit größerer Amplitude im interessierenden Frequenzbereich, vorzugsweise zwischen 150 KHz und 1 GHz, derart gedämpft werden, daß sie nicht zu Richtspannungen beziehungsweise Richtströmen führen, die die Arbeitspunkte der Schaltungselemente des Signalverarbeitenden Schaltungsteils merklich verlagern. Vorteilhafte Weiterbildungen des Gegenstandes nach Anspruch 1 ergeben sich aus den abhängigen Ansprüchen 2 bis 34.

### Zeichnung

Anhand der Zeichnung wird die Erfindung näher erläutert. Es zeigen:
Figur 1 ein erstes und ein zweites elektronisches Gerät, wobei beide Geräte mittels Steckverbindungen und einer Leitung miteinander verbunden sind;
Figur 2 dieselbe Anordnung wie in Figur 1, jedoch ergänzt durch eine Siebschaltung;
Figur 3 als Beispiel ein elektronisches Gerät, das mittels eines Kabelbaums einerseits mit einer Fahrzeugbatterie über Schmelzsicherung und Schalter, andererseits eingangsseitig mit einem zweiten elektronischen Gerät und ausgangsseitig mit einem Motor verbunden ist;
Figur 4 zum besseren Verständnis den Amplitudengang über der Frequenz für dieses komplexe Leitungssystem;
Figur 5a den Schnitt, Figur 5b das Layout eines möglichen Bipolarprozesses zur Darstellung des Gegenstandes der Erfindung;
Figur 6a, b, Figur 7a, b und Figur 8a, b eine mögliche Darstellung von Kapazitäten in diesem Prozeß;
Figur 9 die Ersatzschaltung eines ersten Ausführungsbeispiels einer monolithisch integrierten Siebschaltung in der Wirkung der Schaltung nach Figur 2;
Figur 10 die dazugehörige Schaltung in integrierter Form mit ihrem Layout nach Figur 11;
Figur 12 einen möglichen Kondensator zur Dämpfung der Ausgangsleitung und
Figur 13 einen Kondensator zur Dämpfung der Betriebsstrom-Leitung;
Figur 14 das erreichte Ergebnis unter 14a noch mit einer geringfügigen Verletzung der Lehre der Erfindung, unter 14b nach einer Korrektur;
Figur 15 ein mögliches Beispiel mit einem anderen Prozeß und
Figur 16 das Schnittbild dieser Schaltung.

### Beschreibung der Erfindung

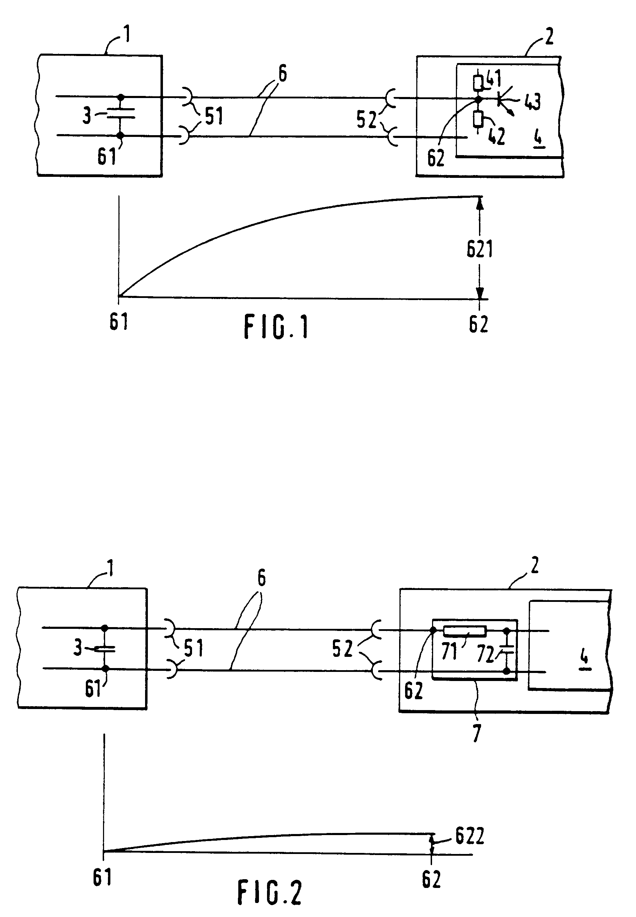

Zunächst werden anhand der Figuren 1 bis 4 wenigstens in einer groben Näherung Entstehung von Störspannungen und herkömmliche Entstörung beschrieben. In Figur 1 ist mit 1 ein erstes und mit 2 ein zweites elektronisches Gerät bezeichnet; beide Geräte sind mittels der Steckverbindungen 51 und 52 und der Leitung 6 miteinander zu einem System verbunden. Um einfache Verhältnisse zu bekommen, liegt am Ausgang des Gerätes 1 ein Kondensator 3 hinreichender Größe zwischen den beiden Leitern der Leitung 6; die an die Leitung 6 angeschlossene elektronische Teilschaltung 4 des Gerätes 2 mit den hier symbolisch dargestellten Komponenten (Widerstände 41 und 42 sowie Transistor 43) sei hochohmig gegen den Wellenwiderstand der Leitung 6; die elektrische Länge der Leitung 6 sei durch den Abstand der Leitungspunkte 61 und 62 gegeben.

Unter diesen Bedingungen ist die Leitung 6 an der Stelle 61 kurzgeschlossen, an der Stelle 62 dagegen im wesentlichen offen. Sie stellt ein resonanzfähiges Gebilde dar, wie etwa ein Lecher- oder Antennensystem; wird dieses nun einem elektromagnetischen Feld passender Frequenz ausgesetzt, so entsteht eine stehende Welle. Das Diagramm gibt den Amplitudenverlauf über der elektrischen Länge 61, 62 für die Grundwelle wieder, auf die Darstellung der entsprechenden Harmonischen wurde der Einfachheit halber verzichtet. Die Amplitude ist bei 61 wegen des Kurzschlusses 0, bei 62 wegen des Leerlaufs ein Maximum, das bei 621 angedeutet ist. Bei den in Frage kommenden Feldstärken von bis zum 100 V/m, eventuell einige 100 V/m, können, sofern begrenzende Faktoren dies nicht verhindern, Maximalamplituden bis zu einigen 100 V auftreten. Zu tiefen Frequenzen hin wird die Einkopplung kapazitiv, die Amplituden nehmen auch wegen des Kondensators 3 rasch ab. Fehlt der Kondensator 3, so ist die Grundwelle durch eine Lambda-Halbe-Ahregung gegeben, auch bei 61 entsteht ein Spannungsbauch, der Nulldurchgang liegt bei der Hälfte der Strecke 61, 62. Selbstverständlich sind auch andere Einkoppelmechanismen denkbar.

In Figur 2 ist die Anordnung nach Figur 1 durch eine siebschaltung 7 ergänzt, die wie hier im einfachsten Fall aus einem ohmschen Widerstand 71 und einem Kondensator 72 bestehen kann; häufig sind sehr viel komplexere Siebschaltungen mit Durchführungskondensatoren, Drosseln usw. erforderlich, um die Funktion der Gesamtanlage sicherzustellen. Im vorliegenden Beispiel sei auf die einfachste, aus den Schaltelementen 71 und 72 bestehende siebschaltung zurückgegriffen.

Der Wellenwiderstand von Verbindungsleitungen in Kraftfahrzeugen liegt näherungsweise in der Größenordnung zwischen 30 Ohm und 300 Ohm; typisch bei etwa 100 Ohm.

Liegt der Widerstand 71 in diesem Bereich und ist der Kondensator 72 induktionsarm und seine Kapazität hinreichend groß, so ist die Leitung 6 in etwa aperiodisch gedämpft die Resonanzüberhöhung verschwindet, es wird nur noch die erheblich niedrigere Amplitude 622 erreicht. Da die Siebschaltung 7 sehr breitbandig sein muß, wird die Kapazität des Kondensators 72 groß. Wegen der räumlichen Ausdehnung der Filter und der damit verbundenen parasitären Leitungsinduktivitäten, besonders auch in der Zusammenschaltung der elektronischen Teilschaltung 4, sind solche Filter selbst in einer integrierten Hybridtechnik nur schwer zu beherrschen. Bei einer monolithischen Integration dagegen ließe sich auch eine komplexe Filterschaltung auf weniger als einem Quadratmillimeter Fläche unterbringen, so daß die Leitungsinduktivitäten sehr viel kleiner und damit leichter beherrschbar werden. Die Probleme entstehen hier dadurch, daß nur Kondensatoren kleiner Kapazität wirtschaftlich zu integrierten sind, die Filter also hochohmig werden; außerdem ist darauf zu achten, daß an den nun unvermeidlichen pn-Übergängen von Komponenten des Filters keine Richtspannungen entstehen beziehungsweise auch keine nennenswerten Richtströme fließen dürfen, die zu Richtspannungen führen.

Bei einer Gerätekombination 1, 2 ohne Kondensator 3, wo die auf der Leitung 6 influenzierte Störspannung weder das Gerät 1 noch das Gerät 2 beeinflussen darf, ist die Lehre der Erfindung beidseitig anzuwenden, wie etwa bei der Anordnung eines Spannungsreglers für einen Drehstromgenerator mit einem Spannungs-Sensor und/oder aktivem Temperatur-Sensor an der Fahrzeugbatterie.

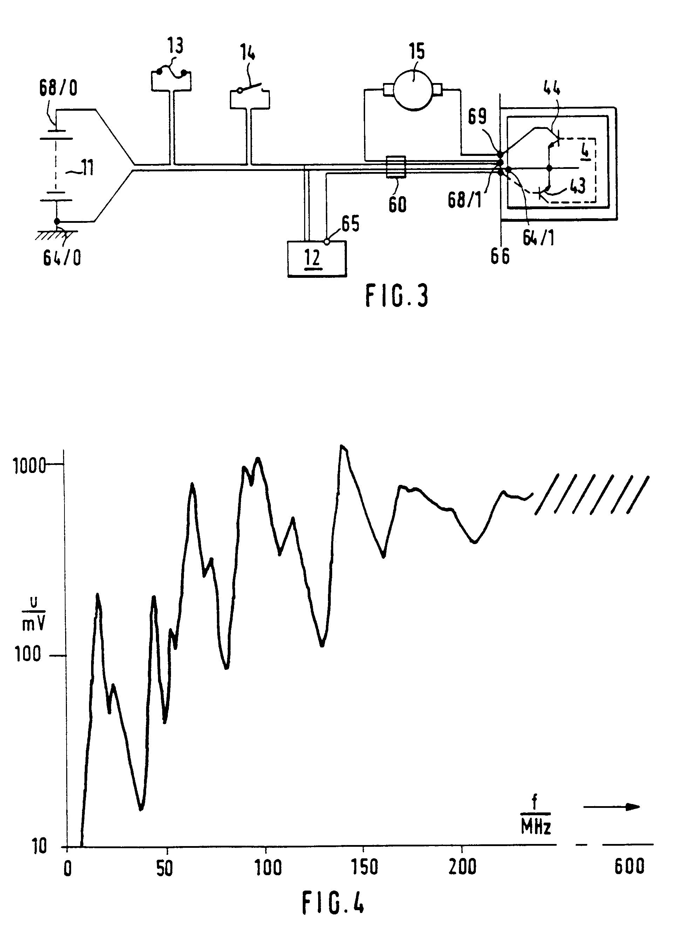

Figur 3 zeigt eine kraftfahrzeugspezifische Anordnung zur Regelung bzw. Steuerung der Drehzahl eines Elektromotors 15 mit dem dazugehörenden Kabelbaum 60; ferner sind bezeichnet: die Fahrzeugbatterie 11 mit ihrem Masseanschluß 64/0 und ihrem Pluspol 68/0, ein signalabgebendes elektronisches Gerät 12 mit seinem Signalausgang 65, eine Schmelzsicherung 13, ein Schalter 14, als zweites Gerät ein monolithisch integrierter Stromregler 4 mit dem Signaleingang 66, dem Masseanschluß 64/1, dem Betriebsspannungs-Anschluß 68/1, dem Signaleingang 66, dem Motorausgang 69 und symbolhaft den beiden Transistoren 43 für die Eingangsschaltung und 44 für die Leistungsstufe.

Der Kabelbaum 60 bezogen auf die Signal-Leitung 65 - 66 stellt nun hochfrequenztechnisch gesehen ein recht komplexes System gekoppelter Kreise unterschiedlicher Eigenfrequenz und Dämpfung dar. Ist das Gerät 4 vom Kabelbaum abgetrennt, so läßt sich das Frequenzverhalten messen. In Figur 4 ist die Amplitude an dem Meßpunkt 66 gegen die Masse 64/1 in logarithmischem Maßstab bei konstanter Einströmung als Funktion der Frequenz in linearem Maßstab aufgetragen. Nach dem Reaktanzsatz von Foster wechseln "Maxima'' und ''Minima'' bzw. ''Zwischenmaxima'' und Zwischenminima'' einander ab; die erste Parallelresonanz liegt etwa bei 15 MHz, die mit geringster Dämpfung bei ca. 100 MHz und 150 MHz mit einem Dämpfungsfaktor von 0,03, was einer mehr als 30-fachen Resonanzüberhöhung entspricht; oberhalb 200 MHz bleiben Maxima und Minima innerhalb des angegebenen Amplitudenbereichs auf hohem Niveau.

Bei den möglichen Feldstärken von bis zu mehr als 100 V/m werden Spannungsamplituden influenziert, die um Größenordnungen über dem linearen Aussteuerbereich von Halbleiter-Schaltungen liegen und immer noch erheblich über der Sperrspannung monolithisch integriert darstellbarer Kondensatoren. Es ist deshalb vorteilhaft, nicht nur die Signalleitung an ihrem Ende 66 zu bedämpfen, sondern möglichst auch die Leitung für die Betriebsspannung 68/1 und die Ausgangsleitung 69, also möglichst das Gesamtsystem ''Kabelbaum''.

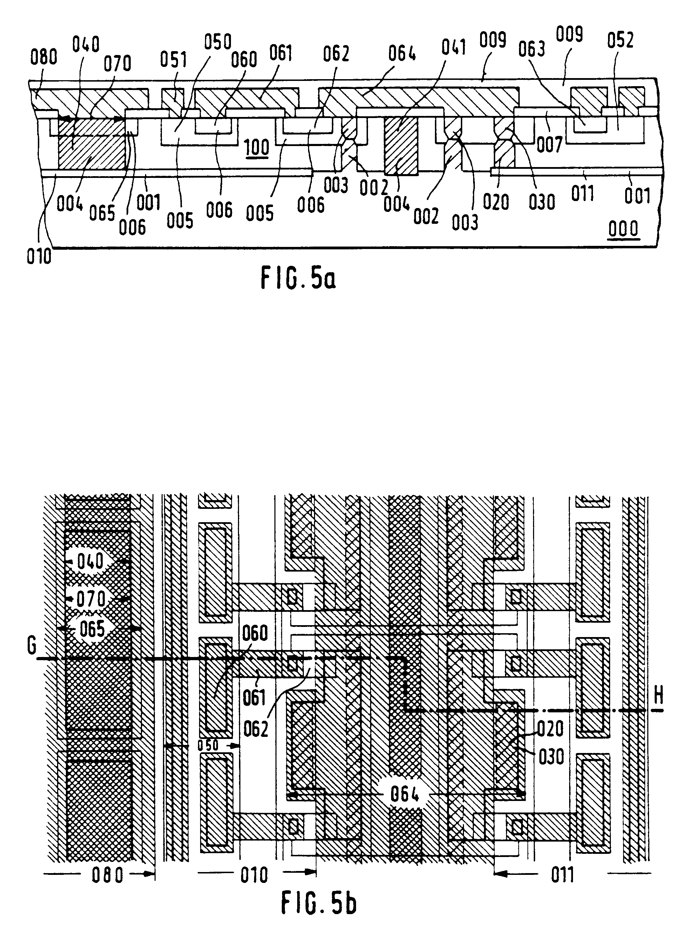

In den Figuren 5a und 5b ist beispielhaft ein möglicher Prozeß zur Darstellung der Erfindung ohne den Versatz durch Unter-Ätzung und Unter-Diffusion wiedergegeben anhand von Schnittbild und Layout von (nicht ganz) zwei Halbzellen eines Leistungstransistors, der als Dämpfungskondensator wirksame Dioden-Elemente in seinen Zellen enthält.

Es bedeuten:
000 Substrat
001 "buried layer"
002 Untere Isolierungsdiffusion
100 Epitaxie
003 Obere Isolierungsdiffusion
004 Kollektoranschluß-Diffusion
005 Basisdiffusion
006 Emitterdiffusion
007 Deckoxid
008 Metallisierung
009 Schutzschicht
070, 090 Kontaktfenster in den Ebenen 007, 009
Die beiden Isolierungs-Diffusionen 002, 003 sind weit, die Kollektor-Anschluß-Diffusion 004 eng von links unten nach rechts oben, das strukturierte Metall 008 dagegen von links oben nach rechts unten schraffiert wiedergegeben. Die Schutzschicht 009 kann aus einem Silan- oder Plasma-Oxid oder aus einem Plasma-Nitrid bestehen, sie ist zum Verständnis der Anordnung nicht erforderlich.

Figur 5a stellt einen Schnitt entlang der Linie GH von Figur 5b dar. Figur 5b ist das Plot des zugehörenden Layouts in gleicher Darstellung. Die kräftigsten Linien zeigen die Umrisse der Kontakt-Fenster, die beiden schwächsten die von Emitter und buried layer. Die Basis ist nur wenig schwächer als die Kontaktfenster gezeichnet. Zusammen mit dem Schnitt nach Figur 5a lassen sich die entsprechenden Zonen eindeutig zuordnen.

Es sind: Der buried layer einer Zelle des Leistungs-Transistors 010, sein Kollektor-Anschluß mit der Kollektoranschluß-Diffusion 040, das zugehörige Kontaktfenster 070, die Kollektoranschluß-Leitung 080, die Basis-Diffusions-Zone 050 mit der Basisanschluß-Leitung 051, die Emitter-Diffusions-Zone mit dem Emitter 060, die Verbindungsleitung zum Emitterwiderstand 061, ein mit der Emitter-Diffusions-Zone gebildeter Emitterwiderstand 062, die Emitter- und Masse-Leitung 064, die Isolierungs-Diffusion 002, 003, eine hier nicht benötigte diffundierte Signalleitung 041; ferner die Komponenten der benachbarten Halbzelle: der buried layer 011, die aufsitzende untere Isolierungs-Diffusions-Zone 020, der Anschlußkontakt 030 für die untere Isolierungs-Diffusions-Zone, ausgeführt mit der oberen Isolierungs-Diffusion, und eine weitere Basis-Diffusions-Zone 052 mit Emitter 063, sowie die Schutzschicht 009.

Die auf dem buried layer 011 aufsitzende untere Isolierungs-Diffusion 020 bildet ein in den Leistungstransistor hineinintegriertes Diodenelement; der Leistungs-Transistor enthält nun eine Vielzahl solcher Elemente, so daß ein unipolarer Kondensator beachtlicher Kapazität erzeugt wird, der am Ausgang der Schaltung 4, Punkt 69, angreift und das Leitungssystem wirksam belastet, was sonst nur im Spezialfall der Sättigung des Leistungs-Transistors vorkommt.

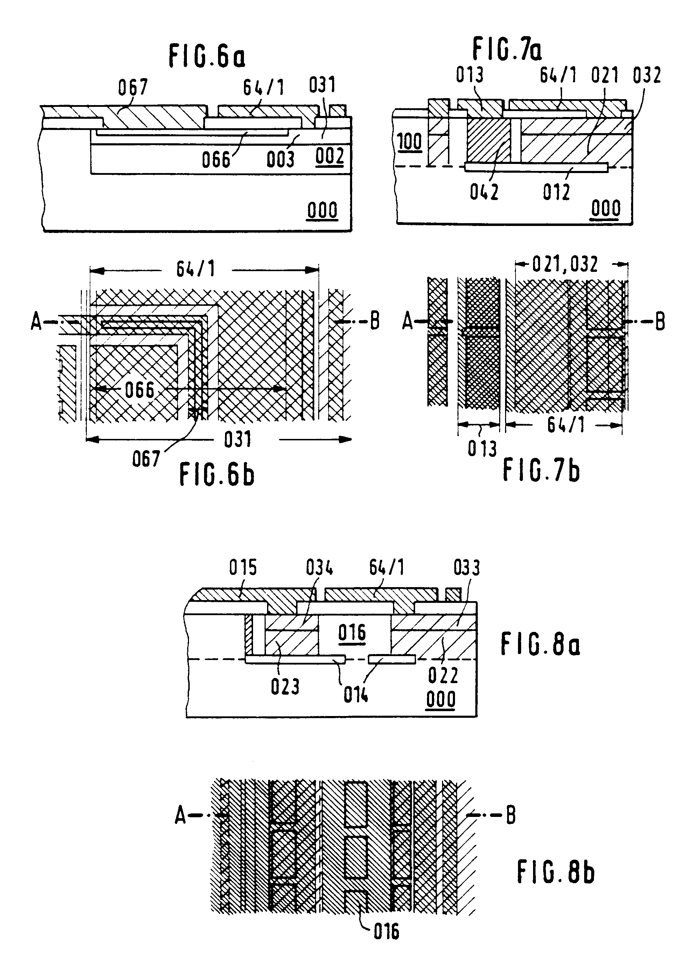

Die Figuren 6a, 7a, 8a stellen einen Schnitt entlang der Linie AB der Figuren 6b, 7b, 8b dar. Es sind drei mögliche Ausführungsformen für Kondensatoren in dem in Figur 5 beschriebenen Prozeß, und zwar in den Figuren 6 und 7 je ein unipolarer, in Figur 8 ein bipolarer Typ. Selbstverständlich können auch noch andere Diffusionszonen zur Bildung von Kondensatoren herangezogen werden. Ausschlaggebend für die Wahl sind einerseits ein möglichst hoher Kapazitätsbelag` andererseits eine hinreichend hohe Durchbruchspannung der Sperrschicht.

In Figur 6 ist 031 eine obere Isolierungs-Diffusions-Zone, 066 eine darin eingebrachte Emitter-Diffusions-Zone, 64/1 der mit 031 verbundene Masseanschluß und 067 der mit der Emitter-Diffusions-Zone 066 verbundene Anschluß der heißen Elektrode des Kondensators, dessen Kapazität durch die durch die Zonen 031, 066 gegebene Sperrschicht gebildet ist. Dieser unipolare Kondensator läßt sich auch für negative Sperrspannungen einsetzen, sofern die untere Isolierungs-Diffusions-Zone weggelassen ist.

In Figur 7 ist 012 eine buried-layer-Diffusions-Zone, 021 eine untere Isolierungs-Diffusions-Zone, 032 eine obere Isolierungs-Diffusions-Zone, 64/1 der Masseanschluß, 042 eine Kollektoranschluß-Diffusions-Zone und 013 der heiße Anschluß des Kondensators; dieser ist gebildet durch die zwischen 012 und 021 liegende Sperrschicht. Die buried-layer-Diffusions-zone 012 ist mittels der Kollektoranschluß-Diffusions-Zone 042 mit dem heißen Anschluß 013 verbunden, sowie 021 mittels 032 mit dem Masseanschluß. Ein kleiner Beitrag zur Kapazität stammt auch von der sich zwischen dem Substrat 000 und der buried-layer-Diffusions-Zone 012 bildenden Sperrschicht. Dieser unipolare Kondensator besitzt eine höhere Sperrspannung als der nach Figur 6, er läßt sich jedoch nicht gegen das Substrat isolieren.

In Figur 8 ist 014 wieder eine buried-layer-Diffusions-zone, 022 eine erste und 023 eine zweite untere Isolierungs-Diffusions-Zone, 033 eine erste und 034 eine zweite obere Isolierungs-Diffusions-Zone, 016 eine Aussparung in der buried-layer-Diffusion 014, 64/1 der Masseanschluß und 015 der Anschluß für die heiße Elektrode. Der Kapazitätsbelag dieses Kondensators bildet sich zwischen den beiden gegeneinandergeschalteten Sperrschichten 022 und 014 bzw. 014 und 023, er ist somit bipolar und damit für die Eingangsschaltungen der Filter geeignet. Richtspannungen entstehen erst dann, wenn die Amplitude der hochfrequenten Störspannung und eine etwa überlagerte Gleichspannung die Durchbruchspannung der symmetrischen Sperrschichten übersteigt bzw. wenn die beiden Teilkapazitäten 022 - 014 und 014 - 023 ungleich groß sind. Die Aussparungen 16 in der buried-layer-Diffusion sind zur Erhöhung des Reihen-Widerstands des Kondensators eingebracht, sie sind nicht obligatorisch.

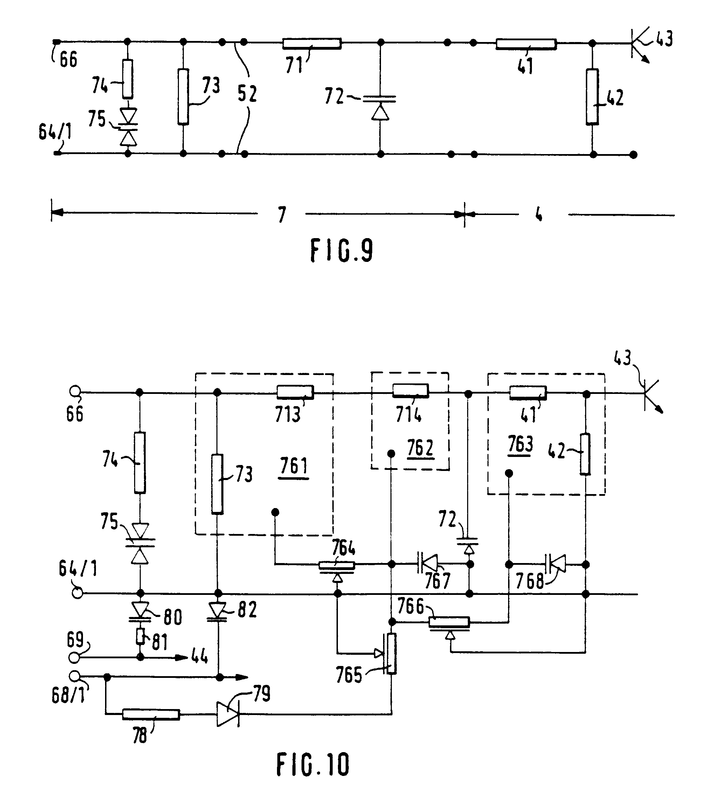

Figur 9 zeigt die Schaltungsanordnung von Figur 2 in einer monolithisch integrierten Bauart. Darin ist mit 4 wieder die an die Siebschaltung angeschlossene elektronische Teilschaltung, mit 7 die Siebschaltung mit dem Widerstand 71 und dem Kondensator 72 als Tiefpaß bezeichnet; die Klemmen 522 entsprechen den Klemmen 52 von Figur 2; eine notwendige Ergänzung mit den Widerständen 73, 74 und dem Kondensator 75 ist dem ursprünglichen Filter vorgeschaltet, der Eingang ist entsprechend Figur 3 mit 66 für die heiße Klemme und mit 64/1 für die Masseklemme bezeichnet. Diese Ergänzung sorgt für die Anpassung an die neuen Verhältnisse. Der Kondensator 72 ist um Größenordnungen kleiner, der Widerstand 71 entsprechend hochohmiger als in Figur 2. In einem praktischen Beispiel liegt der Kondensator 72 bei 100 pF und der Widerstand 71 bei 40 Kiloohm. Entsprechend ist die Summe der Widerstände 41 und 42 - im Fall der Anpassung, der aber nicht unabdingbar einzuhalten ist - ebenfalls bei 40 Kiloohm. Im allgemeinen wird nun ein Eingangswiderstand des Geräts 2 von ca. 5 Kiloohm gefordert, die aber wegen des hochohmigen Tiefpasses nun direkt nicht einzuhalten sind; deshalb ist der Widerstand 73, der in diesem Beispiel vorzugsweise einen Widerstand von 5,33 Kiloohm hat, parallel zum Eingang geschaltet; dieser Wert ist zwar für tiefe Frequenzen mit der dort kapazitiven Leitung und wegen deren niedrigen Koppelkapazität als Hochpaß wirksam, doch für den kritischen Bereich hoher Frequenzen noch viel zu hochobmig gegenüber dem Wellenwiderstand der Leitung 6 bzw. der Verbindungs-Leitung 65 - 66 des Kabelbaums 63 in Figur 3, Die Anpassung erfolgt mit dem Widerstand 74, dem der Kondensator 75 in Reihe geschaltet ist, um einerseits den geforderten Eingangswiderstand von 5 Kiloohm für die niedrige Betriebsfrequenz der Signalspannung zu erhalten, andererseits aber auch, um den Widerstand 74 mit kleinen Flächen im Layout herzustellen, wenn das Gerät einen Fehlanschluß der Signalleitung etwa an die Betriebsspannung unbeschadet überstehen soll. Die Kapazität des Kondensators 75 ist so groß zu wählen, daß die Leitung für Eigen-Frequenzen mit relativ hohen Amplitudenmaxima hinreichend gedämpft ist. Beispielsweise ist für den Kabelbaum 63 mit kritischen Eigenfrequenzen oberhalb 50 MHz der Widerstand 74 ca. 80 Ohm und damit der Kondensator 75 ca. 40 pF groß.

In Figur 10 ist die Schaltung einer vollständigen Anordnung nach der Lehre der Erfindung wiedergegeben, die auch das Übersprechen zwischen einzelnen Komponenten berücksichtigt. Der Widerstand 71 ist aufgeteilt in die beiden Teilwiderstände 713 und 714, die in getrennten Widerstandswannen 761, 762 untergebracht sind; der "noch heiße'' Widerstand 713 liegt mit dem parallel zum Eingang liegenden Widerstand 73 in eine Wanne 761, der Widerstand 714 davon getrennt in einer Wanne 762.

Die Widerstände des Filters sind erfindungsgemäß beispielsweise ausgeführt mit der p-dotierten Basisdiffusion 005 des Prozesses; sie liegen in sperrschichtisolierten Wannen der Epitaxie 100, bilden somit gegen diese einen pn-Übergang. Die Erfindung sieht nun weiter vor, diese pn-Übergänge so hoch in Sperrichtung vorzuspannen, daß sie durch die auftretenden Störspannungen nicht in Flußrichtung gepolt werden. Es ist vorgesehen als Vorspannungsquelle die Betriebsgleichspannung des Geräts beziehungsweise der integrierten Schaltung selbst zu verwenden. Sind diese zu niedrig, so ist eine Spannungsvervielfacher-Schaltung - falls erforderlich, mit einigermaßen eigenstabiler Ausgangsspannung beziehungsweise mit nachgeschaltetem Spannungsstabilisator - anzuwenden. Ferner ist es vorteilhaft, in die Verbindungsleitung von der Vorspannungsquelle zu dem zu sperrenden pn-Übergang eine Diode in Flußrichtung zu schalten. Übersteigt die HF-Amplitude die Vorspannung, so fließt nur Richtstrom, um die kleine Kapazität der Wanne auf das höhere Niveau aufzuladen, ihr Verluste erzeugender Reststrom ist bekanntlich sehr klein. Es kann deshalb auch schon ausreichen, die Vorspannung des zu sperrenden pn-Übergangs bei einer floatenden Wanne durch die hochfrequente Störspannung selbst zu erzeugen, wobei ein parasitärer pn-Übergang als Diode wirksam ist, also nicht unbedingt eine eigene Diode erforderlich ist.

Die eingangsseitigen Komponenten des Filters, die ja an der höchsten Störspannung liegen, koppeln diese kapazitiv in ihre Wannen ein; deshalb ist vorgesehen, ein Übersprechen über die Vorspannungsquelle auf andere Schaltungsteile durch mindestens einen Widerstand im Leitungszug zu verhindern.

Entsprechend ist das Filter der Figur 10 aufgebaut. Der Widerstand 78 liegt einerseits an der Betriebsspannungsquelle 68/1, deren Spannung für den vorgesehenen Zweck hinreichend groß ist, andererseits an der Didoe 79, von der aus die mit Widerstands- und Kapazitätsbelag ausgestatteten Leitungen 764 und 765 zu den Wannen 761 und 762 führen; die Leitungen 764, 765 und 766 sind dargestellt mittels buried-layer-Diffusions-Zonen 001, die unterhalb Zonen mit der unteren Isolierungs-Diffusion 002 liegen, wobei die Zonen 002 über obere Isolierungs-Diffusions-Zonen 003 an die Masseleitung 64/1 angeschlossen sind. Die Wanne 762 ist mit einem zusätzlichen Kondensator 767 an Masse gelegt, ebenso die Wanne 763 mit dem Kondensator 768; beide Kondensatoren lassen sich ohne zusätzlichen Aufwand an Chipfläche im Layout unterbringen. Zur besseren Entkopplung ist die Wanne 763, in der die empfindlichsten Widerstände, nämlich 41 und 42, untergebracht sind, über die Leitung 766 nicht direkt an die Diode 79, sondern an die Wanne 762 angeschlossen.

Wirksam unterstützt wird die Siebschaltung 7 durch den verlustbehafteten Kondensator 80, den Reihenwiderstand 81 parallel zur Kollektor-Emitter-Strecke des Leistungstransistors 44 und den Kondensator 82 zwischen dem positiven Pol 66 und dem negativen Pol 64/1 der Betriebsspannung, dessen Verlustwiderstand wirksam von den Stromverbrauchern der Gesamtschaltung gebildet ist.

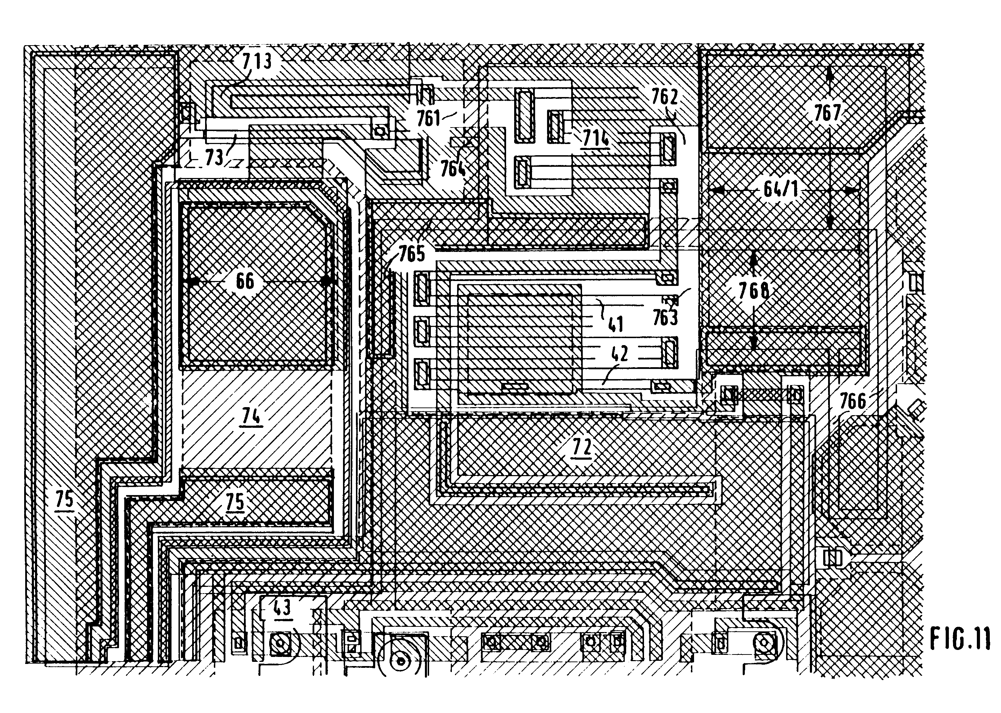

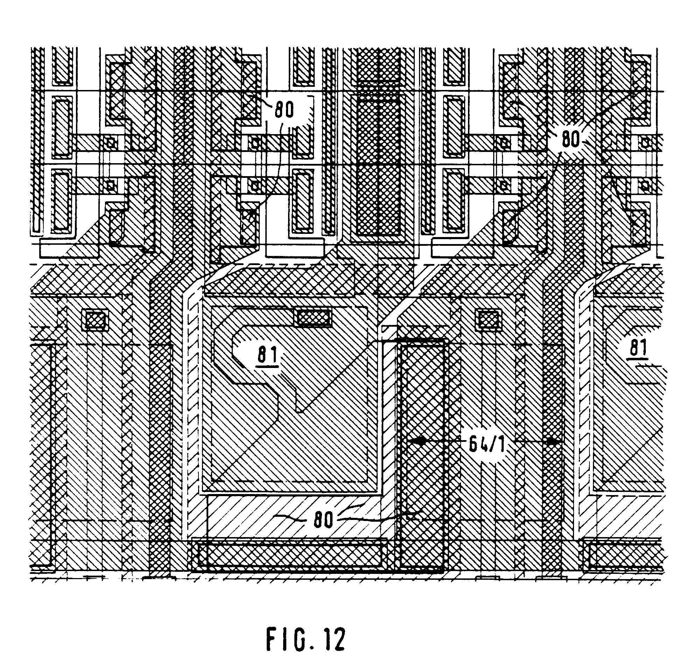

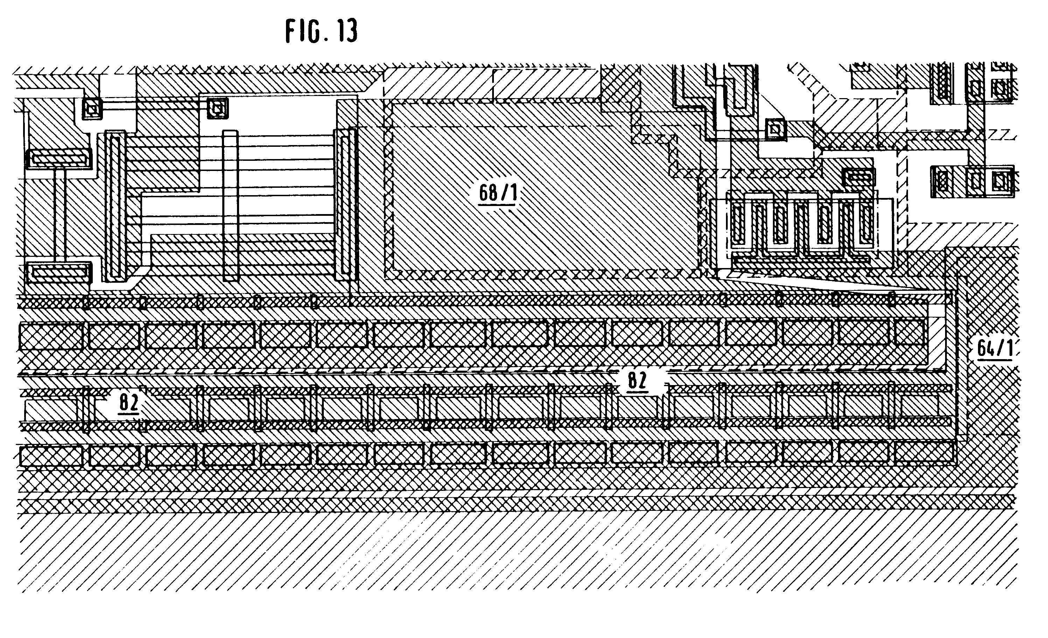

Figur 11 zeigt das zu der Schaltung nach Figur 10 gehörende Layout; der Kondensator 80 mit Verlustwiderstand 81 ist in Figur 12, der Kondensator 82 in Figur 13 wiedergegeben. Die Komponenten tragen wieder die bereits bekannten Bezeichnungen.

Der zusätzliche Flächenaufwand für dieses Filter liegt etwa bei 0,4 mm², da der Präzisions-Spannungsteiler mit den Widerständen 71, 41 und 42 sowie die Anschlußflecken 66 und 64/1 auch ohne das Filter erforderlich gewesen wären.

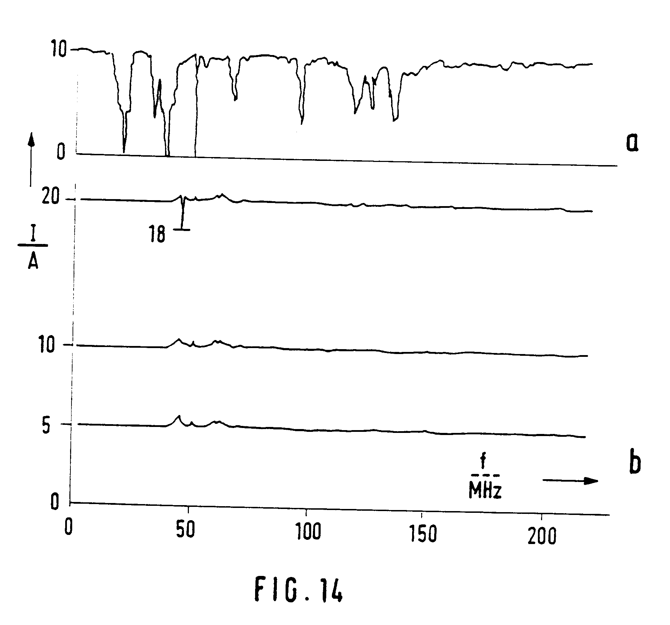

Das Ergebnis ist in den Figuren 14a, b wiedergegeben; in Figur 14a ist noch ein Verstoß gegen die Lehre der Erfindung, nämlich der Forderung nach Richtstromfreiheit als Fehler enthalten, während Figur 14b das Ergebnis nach der Berichtigung des Fehlers aufweist. Um die Kennlinien vollständig einzuebnen, wäre ein etwas größerer Aufwand erforderlich gewesen. Die Lösung stellt somit einen tragbaren Kompromiß für die gestellte Aufgabe dar.

Mit den vorgeschlagenen Lösungen lassen sich Siebschaltungen darstellen, die monolithisch integriert die geforderte elektromagnetische Verträglichkeit (EMV) sicherstellen. Die EMV-Siebschaltungen wurden ihrer Aufgabe entsprechend als einfache Tiefpässe ausgeführt, obwohl sie selbstverständlich durch Vorschalten eines Kondensators - für den Fall, daß nur Wechselspannungssignale übertragen werden sollen - auch zu einem "Bandpaß" bzw. durch weitere Glieder zu einer Siebschaltung höherer Ordnung erweiterbar sind.

Wie bereits ausgeführt, ist für die Funktion dieses in monolithisch integrierter Technik ausgeführten Filters entscheidend, daß die Komponenten des Filters - im Beispiel bevorzugt 71 (72), 73, 74 und 75 - keine Richtspannungen beziehungsweise Richtströme liefern, welche sich der Signalspannung beziehungsweise dem Signalstrom überlagern und diese verfälschen.

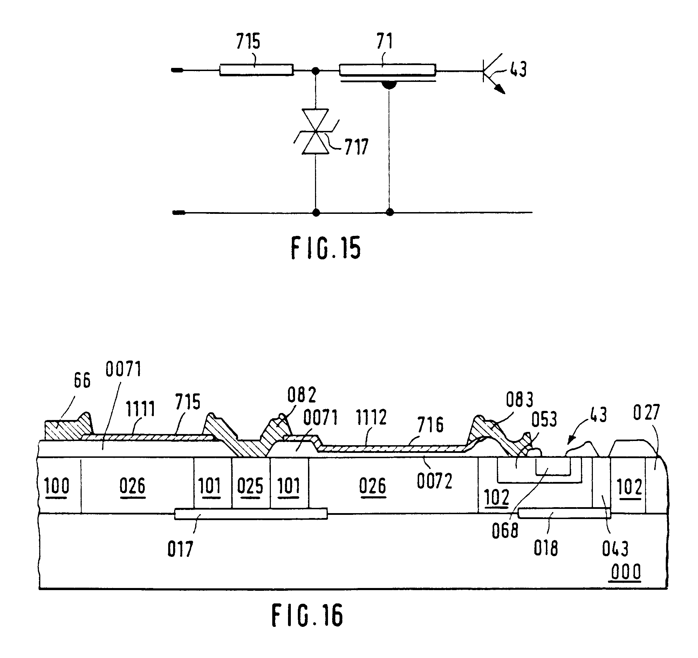

Eine andere vorteilhafte Lösung, Richtspannungen beziehungsweise Richtströme zu vermeiden, ist mit einer erweiterten Technologie dadurch zu erreichen, daß mindestens eine der Komponenten des Filters auf dem der Passivierung der im Silizium-Einkristall untergebrachten elektronischen Schaltung 4 dienenden Deckoxid 007 oder bei einer Mehrlagen-Metallisierung auch auf der dielektrischen Zwischenschicht 0073 aufgebracht ist, die üblicherweise aus Silizium-Dioxid, Silizium-Nitrid oder auch anderen anorganischen beziehungsweise organischen Dielektrika wie Tantal-Pentoxid oder Polyimidlack besteht. Widerstände des Filters lassen sich dann mittels mehr oder weniger stark dotiertem Polysilizium beziehungsweise auch Metallegierungen, wie Chrom-Nickel oder dergleichen, darstellen durch Abscheiden auf dem Dielektrikum. Auch Kondensatoren lassen sich dann mit sperrschichtfreiem Dielektrikum besonders vorteilhaft darstellen, wobei die Gegenelektrode durch eine hochdotierte Zone im Silizium gebildet sein kann; bei einem Prozeß mit einer Metallisierung in zwei Ebenen sind Kondensatoren mit beiden Metallebenen als Elektroden und der isolierenden Zwischenschicht 0073 als Dielektrikum auszuführen; um kleine Flächen zu bekommen, sind hohe spezifische Flächenkapazitäten erwünscht, also extrem dünne dielektrische Schichten; diese sind gegen Durchschläge, also vor Überspannungen, mittels einer Zenerdioden-Anordnung unipolar oder bipolar zu schützen. Widerstand und Kondensator lassen sich auch zu einer Leitung zusammenfassen. Der hochohmige Widerstandsbelag bildet dabei gleich die eine Elektrode des Kondensators. Die folgenden Figuren 15 und 16 zeigen ein entsprechendes Beispiel.

Verwendet wird auch hier wieder eine übliche monolithisch integrierte Schaltung in Bipolartechnik mit schwach p-dotiertem Substrat als Ausgangsmaterial; selbstverständlich läßt sich die Lehre der Erfindung auch auf integrierte Schaltkreise mit komplexeren Strukturen, komplementären Strukturen oder Strukturen in Unipolartechnik (P-MOS, N-MOS, C-MOS) übertragen.

Substrat und Diffusionszonen sind wieder mit 000 bis 006, Metall und Schutzschicht mit 007 bis 009, die Epitaxie mit 100 und die Kontaktfenster mit 070, sowie das neueingeführte vorzugsweise dotierte Polysilizium mit 111 bezeichnet. Auf die Darstellung der üblicherweise über dem Ganzen liegenden Schutzschicht 009 wurde verzichtet, ebenso auf die Anwendung von Mehrlagen-Metallisierungen.

Figur 15 zeigt den dargestellten Teil einer Schaltung mit einer "Leitung" als Siebschaltung, Figur 16 den dazugehörigen Schnitt durch die monolithisch integrierte Schaltung.

Der Widerstand 715 des Tiefpasses entspricht einem mehr oder weniger großen Teil des Widertands 71 von Figur 9; der Kondensator 72 und der restliche Teil des Widerstands 71 ist durch die "Leitung" 716 mit Widerstands- und Kapazitätsbelag ersetzt; die bipolare Z-Diode 717 schützt die Leitung vor Überspannungen, die auf den Eingang des Filters gelangen können, oder anders ausgedrückt, sie erlaubt extrem dünnes Oxid für den Kapazitätsbelag der Leitung 716, deren Ende mit der Basis des zur elektronischen Schaltung gehörenden Transistors 43 und dem nicht dargestellten Widerstand 42 verbunden ist.

Im Schnitt von Figur 16 sind die einzelnen Teile beziehungsweise Zonen wie oben angegeben benannt; dazu ergänzend ist mit dem buried layer 017 die negativen Elektrode der Z-Diode 717 gebildet, während 018 zum Kollektor des Transistors 43 gehört; die Bereiche 101 sind die dem Filter, die Bereiche 102 die dem Transistor 43 zugeordneten Abschnitte der Epitaxie 100; mit den Isolierungsdiffusions-Zonen 002, 003 sind die Anoden 025 und 026 der bipolaren Z-Dide 717 gebildet, wobei die Anode 026 gleichzeitig auch als Masseelektrode des Filters, insbesondere des Kapzitätsbelags der Leitung 716 dient, 027 ist die Isolierung der restlichen Schaltung; 043 ist die in diesem Beispiel nur in der Teilschaltung 4 vorkommende Kollektoranschlußdiffusionszone des Transistors 43, ebenso 053 seine Basis und 068 sein Emitter; 0071 ist das dicke Feldoxid, auf dem der metallene Anschlußfleck 66 des Filters und der mit Polysilizium 1111 gebildete Teilwiderstand 715 angeordnet sind, während sich der Widerstandsbelag 1112 der Leitung 716 auf dem dünnen Oxid 0072 wie etwa dem Emitteroxid eines Bipolarprozesses oder dem Gateoxid eines MOS-Prozesses befindet; die metallische Verbindung der Teile 715 mit 716 ist mit 082, die von 716 mit der Basis von Transistor 43 mit 083 bezeichnet; die zugehörenden Kontaktfenster sind 073 und 074. Der Widerstandsbelag 1112 der Leitung 716 ist mäanderförmig auf einer größeren Fläche des dünnen Oxids 0072 angeordnet, um eine hinreichend große Leitungslänge zu erreichen. Die Dicht dargesstellten Komponenten der Figur 15 lassen sich auf dieselbe Art erzeugen; wird auch der Kondensator 75 als MOS-Kapazität ausgebildet, so ist auch er mittels einer bipolaren Z-Diode zu schützen.

Sind größere Dämpfungen gefordert, so sind die Filter vorteilhaft mehrstufig auszuführen. Auch ist auf das durch parasitäre Komponenten hervorgerufe Übersprechen zu achten. Gehören Polysilizium und dünne Oxide zum Herstellungsprozeß der monolithisch integrierten Schaltung, so ist es stets richtig, diese wie beschrieben für die Filter zu nutzen, da bei dieser Technik pn-Übergänge überhaupt erst tangiert werden, wenn die HF-Amplituden bereits hinreichend gedämpft sind.

## Patentansprüche

1. Elektronisches Gerät mit einem signalverarbeitenden Schaltungsteil (4), zu dem von außen Leitungen geführt sind, und zwar mindestens eine für die Versorgung mit Betriebsstrom bzw. mit Betriebsspannung und/oder mindestens eine für Signaleingänge und/oder Signalausgänge, und mit dem signalverarbeitenden Schaltungsteil (4) zugeordneten, als Siebschaltung (7) ausgebildeten Schaltmitteln zur Dämpfung hochfrequenter Störspannungen, die durch äußere elektromagnetische Felder induziert werden und deren Amplitude größer, vorzugsweise erheblich größer als der lineare Aussteuerbereich der Schaltungselemente des signalverarbeitenden Schaltungsteils (4) ist, dadurch gekennzeichnet, daß die mindestens einer Leitung (6) zugeordneten Schaltmittel (7) aus Gliedern zur Dämfpung hochfrequenter Störspannungen bestehen, daß die zugeordneten Schaltmittel (7) monolithisch integriert sind und daß die monolithisch integrierten Schaltmittel (7) so ausgebildet sind, daß Störspannungen im Bereich der genannten Amplituden keine Richtspannungen bzw. Richtströme erzeugen, die die Arbeitspunkte der Schaltungselemente des signalverarbeitenden Schaltungsteils (4) merklich verlagern.

2. Elektronisches Gerät nach Anspruch 1, dadurch gekennzeichnet, daß die zur Dämpfung hochfrequenter Störspannungen dienenden Schaltmittel (7) zusammen mit dem signalverarbeitenden Schaltungsteil (4) oder Teilen desselben monolithisch integriert sind.

3. Elektronisches Gerät nach einem der vorhergehenden Ansprüche, dadurch gekennzeichnet, daß die mindestens einer Leitung (6) zugeordneten Schaltmittel (7) aus Gliedern zur Dämpfung der Leitung bzw. des Leitungssystems bestehen.

4. Elektronisches Gerät nach einem der vorhergehenden Ansprüche, dadurch gekennzeichnet daß die mindestens einer Leitung (6) zugeordneten Schaltmittel (7) aus Gliedern zur Dämpfung des Störsignals, insbesondere aus einem Tiefpaß, bestehen.

5. Elektronisches Gerät nach einem der vorhergehenden Ansprüche, dadurch gekennzeichnet, daß mindestens eine Komponente (71, 713, 714, 72, 73, 74, 75) der Siebschaltung (7) durch eine in das einkristalline Halbleitermaterial der monolithisch integrierten Schaltung eingebrachte Zone dargestellt ist, die mit dem sie umgebenden Halbleitermaterial einen pn-Übergang bildet.

6. Elektronisches Gerät nach Anspruch 5, gekennzeichnet durch eine Vorspannung des pn-Übergangs zwischen der genannten mindestens einen Komponente (71, 713, 714, 72, 73, 74, 75) und dem sie umgebenden Halbleitermaterial in Sperrichtung.

7. Elektronisches Gerät nach Anspruch 6, dadurch gekennzeichnet, daß die Vorspannung aus der Betriebsgleichspannung der monolithisch integrierten Schaltung bzw. des Gerätes gewonnen ist.

8. Elektronisches Gerät nach Anspruch 5 oder 6, gekennzeichnet durch eine in Flußrichtung geschaltete Diode (79) zwischen der Vorspannungsquelle und dem pn-Übergang zwischen der genannten mindestens einen Komponente (71, 713, 714, 72, 73, 74, 75) und dem sie umgebenden Halbleitermaterial.

9. Elektronisches Gerät nach mindestens einem der Ansprüche 6 bis 8, gekennzeichnet durch eine aus mindestens einem Widerstand (78) bestehende Siebschaltung zwischen der Vorspannungsquelle und dem pn-Übergang zwischen der genannten mindestens einen Komponente (71, 713, 714, 72, 73, 74, 75) und dem sie umgebenden Halbleitermaterial.

10. Elektronisches Gerät nach einem der Ansprüche 6 bis 9, gekennzeichnet durch eine Spannungsvervielfacherschaltung zwischen der Vorspannungsquelle und dem pn-Übergang zwischen der genannten mindestens einen Komponente (71, 713, 714, 72, 73, 74, 75) und dem sie umgebenden Halbleitermaterial.

11. Elektronisches Gerät nach Anspruch 10, gekennzeichnet durch eine ihre Ausgangsspannung begrenzende Spannungsvervielfacherschaltung oder eine der Spannungsvervielfacherschaltung nachgeschaltete Stabilisierungsschaltung.

12. Elektronisches Gerät nach einem der vorhergehenden Ansprüche, dadurch gekennzeichnet, daß zwischen Komponenten der Siebschaltung (7) und Hasse (Substrat) gegeneinandergeschaltete pn-Übergänge als Amplitudenbegrenzer angeordnet sind.

13. Elektronisches Gerät nach einem der vorhergehenden Ansprüche, dadurch gekennzeichnet, daß als kapazitive Komponente der Siebschaltung (7) mindestens ein Paar gegeneinandergeschalteter pn-Übergänge angeordnet ist.

14. Elektronisches Gerät nach Anspruch 12 oder 13, dadurch gekennzeichnet, daß die npn- bzw. pnp-Struktur des mindestens einen Paars gegeneinandergeschalteter pn-Übergänge wenigstens näherungsweise symmetriert ist.

15. Elektronisches Gerät nach einem der vorhergehenden Ansprüche, dadurch gekennzeichnet, daß zwischen der Eingangsklemme der Siebschaltung (7) und Masse mindestens ein Widerstand (73, 74) geschaltet ist.

16. Elektronisches Gerät nach Anspruch 15, dadurch gekennzeichnet, daß ein Widerstand (74) zwischen der Eingangsklemme der Siebschaltung (7) und Masse niederohmig ausgeführt ist, so daß er die zugeordnete mindestens eine Leitung (65, 66) stark, vorzugsweise im aperiodischen Grenzfall, bedämpft.

17. Elektronisches Gerät nach Anspruch 16, gekennzeichnet durch einen Kondensator (75) in Reihe zu dem niederohmigen Widerstand (74).

18. Elektronisches Gerät nach Anspruch 17, dadurch gekennzeichnet, daß der Kondensator (75) durch zwei gegeneinandergeschaltete Dioden gebildet ist.

19. Elektronisches Gerät nach Anspruch 18, dadurch gekennzeichnet, daß der Kondensator (75) durch zwei gegeneinandergeschaltete Dioden mit innerem Bahnwiderstand verlustbehaftet gebildet ist (Figur 11).

20. Elektronisches Gerät nach einem der vorhergehenden Ansprüche, gekennzeichnet durch eine Leitung mit Widerstands- und Kapazitätsbelag als Komponente der Siebschaltung (7).

21. Elektronisches Gerät nach Anspruch 6, dadurch gekennzeichnet, daß die in Sperrichtung wirkende Vorspannung aus der die Störspannung bildenden Eingangswechselspannung selbst mittels eines als Diode wirkenden pn-Übergangs erzeugt ist.

22. Elektronisches Gerät nach einem der vorhergehenden Ansprüche, dadurch gekennzeichnet, daß mindestens eine Komponente (71) der Siebschaltung (7) in mehrere Abschnitte (713, 714) unterteilt ist, um parasitäres Übersprechen zu reduzieren.

23. Elektronisches Gerät nach einem der vorhergehenden Ansprüche, dadurch gekennzeichnet, daß Komponenten der Siebschaltung (7) in mindestens zwei getrennten, gegeneinander isolierten Wannen (761, 762, 763) untergebracht sind, um parasitäres Übersprechen zu reduzieren.

24. Elektronisches Gerät nach Anspruch 23, dadurch gekennzeichnet, daß die gegeneinander isolierten Wannen (761, 762, 763) über unabhängige Entkopplungsnetzwerke (764, 765) mit der Vorspannungsquelle verbunden sind.

25. Elektronisches Gerät nach Anspruch 23, dadurch gekennzeichnet, daß mindestens zwei der gegeneinander isolierten Wannen (762, 763) über ein Entkopplungsnetzwerk (766) miteinander verbunden sind.

26. Elektronisches Gerät nach einem der vorhergehenden Ansprüche, dadurch gekennzeichnet, daß zur Verhinderung von Richtspannungen bzw. Richtströmen mindestens eine Komponente (71, 713 bis 716, 74, 75) der Siebschaltung (7) auf mindestens einer (0071, 0072) der dielektrischen Deckschichten der monolithisch integrierten Schaltung angeordnet ist.

27. Elektronisches Gerät nach Anspruch 26, dadurch gekennzeichnet, daß dem eingangsseitigen Anschluß (66) der Siebschaltung (7) zugewandte Komponenten (715) zur Erzielung einer größeren Durchschlagsfestigkeit auf einer dickeren dielektrischen Deckschicht (0071), vorzugsweise auf dem Feldoxid, angeordnet sind.

28. Elektronisches Gerät nach Anspruch 26 oder 27, dadurch gekennzeichnet, daß dem eingangsseitigen Anschluß (66) der Siebschaltung (7) abgewandte Komponenten (716) zur Erzielung eines größeren Kapazitätsbelags auf einer dünneren dielektrischen Deckschicht (0072) angeordnet sind.

29. Elektronisches Gerät nach mindestens einem der vorhergehenden Ansprüche, gekennzeichnet durch mindestens eine Spannungsbegrenzerschaltung zum Schutz von Komponenten (715) der Siebschaltung (7) gegen Spannungsdurchschläge.

30. Elektronisches Gerät nach Anspruch 29, gekennzeichnet durch eine Z-Diode als Spannungsbegrenzerschaltung.

31. Elektronisches Gerät nach Anspruch 30, gekennzeichnet durch eine bipolare Z-Diode (717) als Spannungsbegrenzerschaltung.

32. Elektronisches Gerät nach Anspruch 31, dadurch gekennzeichnet, daß die bipolare Z-Diode (717) als symmetrische npn- oder pnp-Struktur (025, 017, 026) ausgeführt ist.

33. Elektronisches Gerät nach einem der Ansprüche 29 bis 32, gekennzeichnet durch mindestens einen Widerstand (715) zwischen dem eingangsseitigen Anschluß (66) der Siebschaltung (7) und der Spannungsbegrenzerschaltung.

34. Elektronisches Gerät nach mindestens einem der vorhergehenden Ansprüche, gekennzeichnet durch an die zu sperrende Spannung über den Gradienten der Dotierung angepaßte Sperrschichtkondensatoren.

## Claims

1. Electronic device having a signal-processing circuit section (4) to which lines are led from outside, specifically at least one for supplying operating current and operating voltage and/or at least one for signal inputs and/or signal outputs, and having circuit means, assigned to the signal-processing circuit section (4) and constructed as a filter circuit (7), for damping high-frequency interference voltages which are induced by external electromagnetic fields and whose amplitude is greater, preferably substantially greater, than the linear control range of the circuit elements of the signal-processing circuit section (4), characterised in that the circuit means (7) assigned to at least one line (6) consist of elements for damping high-frequency interference voltages, in that the assigned circuit means (7) are monolithically integrated, and in that the monolithically integrated circuit means (7) are constructed such that interference voltages in the range of said amplitudes do not generate any rectified voltages or rectified currents which noticeably shift the working points of the circuit elements of the signal-processing circuit section (4).

2. Electronic device according to Claim 1, characterised in that the circuit means (7) serving for damping high-frequency interference voltages are monolithically integrated together with the signal-processing circuit section (4) or parts of the same.

3. Electronic device according to one of the preceding claims, characterised in that the circuit means (7) assigned to at least one line (6) consist of elements for damping the line or the line system.

4. Electronic device according to one of the preceding claims, characterised in that the circuit means (7) assigned to at least one line (6) consist of elements for damping the interference signal, in particular of a low-pass filter.

5. Electronic device according to one of the preceding claims, characterised in that at least one component (71, 713, 714, 72, 73, 74, 75) of the filter circuit (7) is represented by a zone which is introduced into the monocrystalline semiconductor material of the monolithically integrated circuit and forms a pn junction with the semiconductor material surrounding it.

6. Electronic device according to Claim 5, characterised by a bias, in the reverse direction, of the pn junction between the said at least one component (71, 713, 714, 72, 73, 74, 75) and the semiconductor material surrounding it.

7. Electronic device according to Claim 6, characterised in that the bias is obtained from the operating dc voltage of the monolithically integrated circuit or of the device.

8. Electronic device according to Claim 5 or 6, characterised by a diode (79), connected in the forward direction, between the bias source and the pn junction between the said at least one component (71, 713, 714, 72, 73, 74, 75) and the semiconductor material surrounding it.

9. Electronic device according to at least one of Claims 6 to 8, characterised by a filter circuit, consisting of at least one resistor (78), between the bias source and the pn junction between the said at least one component (71, 713, 714, 72, 73, 74, 75) and the semiconductor material surrounding it.

10. Electronic device according to one of Claims 6 to 9, characterised by a voltage multiplier circuit between the bias source and the pn junction between the said at least one component (71, 713, 714, 72, 73, 74, 75) and the semiconductor material surrounding it.

11. Electronic device according to Claim 10, characterised by a voltage multiplier circuit limiting its output voltage, or by a stabiliser circuit downstream of the voltage multiplier circuit.

12. Electronic device according to one of the preceding claims, characterised in that pn junctions connected back to back are arranged as amplitude limiters between components of the filter circuit (7) and frame (substrate).

13. Electronic device according to one of the preceding claims, characterised in that at least one pair of pn junctions connected back to back is arranged as a capacitive component of the filter circuit (7).

14. Electronic device according to Claim 12 or 13, characterised in that the npn or pnp structure of at least one pair of pn junctions connected back to back is at least approximately balanced.

15. Electronic device according to one of the preceding claims, characterised in that at least one resistor (73, 74) is connected between the input terminal of the filter circuit (7) and frame.

16. Electronic device according to Claim 15, characterised in that one resistor (74) between the input terminal of the filter circuit (7) and frame is designed to be of low resistance so that it damps at least assigned one line (65, 66) strongly, preferably in the aperiodic limiting case.

17. Electronic device according to Claim 16, characterised by a capacitor (75) in series with the low-resistance resistor (74).

18. Electronic device according to Claim 17, characterised in that the capacitor (75) is formed by two diodes connected back to back.

19. Electronic device according to Claim 18, characterised in that the capacitor (75) is formed dissipatively by two diodes connected back to back and having an internal bulk resistance (Figure 11).

20. Electronic device according to one of the preceding claims, characterised by a line having distributed resistance and capacitance as a component of the filter circuit (7).

21. Electronic device according to Claim 6, characterised in that the bias acting in the reverse direction is generated from the AC input voltage itself, which forms the interference voltage, by means of a pn junction acting as a diode.

22. Electronic device according to one of the preceding claims, characterised in that at least one component (71) of the filter circuit (7) is subdivided into a plurality of sections (713, 714) in order to reduce parasitic crosstalk.

23. Electronic device according to one of the preceding claims, characterised in that components of the filter circuit (7) are accommodated in at least two separate, mutually insulated troughs (761, 762, 763) in order to reduce parasitic crosstalk.

24. Electronic device according to Claim 23, characterised in that the mutually insulated troughs (761, 762, 763) are connected to the bias source via independent decoupling networks (764, 765).

25. Electronic device according to Claim 23, characterised in that at least two of the mutually insulated troughs (762, 763) are connected to one another via a decoupling network (766).

26. Electronic device according to one of the preceding claims, characterised in that in order to prevent rectified voltages or rectified currents at least one component (71, 713 to 716, 74, 75) of the filter circuit (7) is arranged on at least one (0071, 0072) of the dielectric covering layer of the monolithically integrated circuit.

27. Electronic device according to Claim 26, characterised in that components (715) for achieving a higher breakdown strength, which are assigned to the input-side terminal (66) of the filter circuit (7), are arranged on a thicker dielectric covering layer (0071), preferably on the field oxide.

28. Electronic device according to Claim 26 or 27, characterised in that components (716) for achieving a higher distributed capacitance, which are averted from the input-side terminal (66) of the filter circuit (7), are arranged on a thinner dielectric covering layer (0072).

29. Electronic device according to at least one of the preceding claims, characterised by at least one voltage limiter circuit for protecting components (715) of the filter circuit (7) against dielectric breakdowns.

30. Electronic device according to Claim 29, characterised by a Z diode as voltage limiter circuit.

31. Electronic device according to Claim 30, characterised by a bipolar Z diode (717) as voltage limiter circuit.

32. Electronic device according to Claim 31, characterised in that the bipolar Z diode (717) is designed as a symmetrical npn structure or pnp structure (025, 017, 026).

33. Electronic device according to one of Claims 29 to 32, characterised by at least one resistor (715) between the input-side terminal (66) of the filter circuit (7) and the voltage limiter circuit.

34. Electronic device according to at least one of the preceding claims, characterised by junction capacitors adapted to the voltage to be blocked via the gradient of the doping.

## Revendications

1. Appareil électronique avec un circuit de traitement de signal (4) auquel sont reliées des lignes extérieures et cela au moins une ligne pour l'alimentation en courant de fonctionnement ou en tension de fonctionnement et/ou au moins une ligne pour les entrées de signaux et/ou les sorties de signaux et une partie de circuit (4) de traitement de signal en forme de filtre (7) pour atténuer les tensions parasites à haute fréquence induites par les champs électromagnétiques externes et dont l'amplitude serait supérieure voire très supérieure à la plage linéaire d'exploitation des éléments de la partie de circuit (4) traitant les signaux, appareil caractérisé en ce que les moyens de commutation (7) associés au moins à une ligne (6) se composent d'éléments pour amortir les tensions parasites à haute fréquence, les moyens de commutation correspondants (7) étant intégrés de manière monolithique et en ce que ces moyens de commutation (7) ainsi intégrés sont conçus pour que les tensions parasites au niveau des amplitudes évoquées ne génèrent aucune tension redressée ou courant redressé qui décalerait de manière significative les points de fonctionnement des éléments de commutation de la partie de circuit 4 traitant les signaux.

2. Appareil électronique selon la revendication 1, caractérisé en ce que les moyens de commutation (7) servant à amortir les tensions parasites à haute fréquence sont intégrés de manière monolithique avec la partie de circuit (4) traitant les signaux ou des composants de cette partie.

3. Appareil électronique selon l'une des revendications précédentes, caractérisé en ce que les moyens de commutation (7) associés au moins à une ligne (6) se composent d'éléments pour amortir la ligne et/ou le système de lignes.

4. Appareil électronique selon l'une des revendications précédentes, caractérisé en ce que les moyens de commutation (7) associés à au moins une ligne (6) se composent d'éléments pour amortir les signaux parasites, notamment un filtre passe-bas.

5. Appareil électronique selon l'une des revendications précédentes, caractérisé en ce qu'au moins un composant (71, 713, 714, 72, 73, 74, 75) du filtre (7) est constitué par au moins une zone prévue dans le matériau semi-conducteur cristallin du circuit intégré monolithique, cette zone formant une jonction pn avec la matière semi-conductrice environnante.

6. Appareil électronique selon la revendication 5, caractérisé par une tension de polarisation de la jonction pn dans le sens du blocage entre au moins l'unique composant évoqué (71, 713, 714, 72, 73, 74, 75) et la matière semi-conductrice qui l'entoure.

7. Appareil électronique selon la revendication 6, caractérisé en ce que la tension de polarisation est dérivée de la tension continue de fonctionnement du circuit monolithique intégré ou de l'appareil.

8. Appareil électronique selon la revendication 5 ou 6, caractérisé par une diode (79) branchée dans le sens passant entre la source de tension de polarisation et la jonction pn entre au moins l'un des composants évoqués (71, 713, 714, 72, 73, 74, 75) et la matière semi-conductrice qui l'entoure.

9. Appareil électronique selon au moins l'une des revendications 6 à 8, caractérisé par un filtre formé d'au moins une résistance (78) entre la source de tension de polarisation et la jonction pn entre au moins le composant évoqué (71, 713, 714, 72, 73, 74, 75) et la matière semi-conductrice qui l'en-toure.

10. Appareil électronique selon l'une des revendications 6 à 9, caractérisé par un circuit multiplicateur de tension prévu entre la source de tension de polarisation et la jonction pn entre au moins le composant évoqué (71, 713, 714, 72, 73, 74, 75) et la matière semi-conductrice qui l'entoure.

11. Appareil électronique selon la revendication 10, caractérisé par un circuit multiplicateur de tension qui limite sa tension de sortie ou un circuit de stabilisation en aval du circuit multiplicateur de tension.

12. Appareil électronique selon l'une des revendications précédentes, caractérisé en ce qu'entre les composants du filtre (7) et la masse (substrat) on a des jonctions pn branchées en opposition comme limiteur d'amplitude.

13. Appareil électronique selon l'une des revendications précédentes, caractérisé en ce que le composant capacitif du filtre (7) est constitué par au moins une paire de jonctions pn branchée en opposition.

14. Appareil électronique selon la revendication 12 ou 13, caractérisé en ce que la structure npn ou pnp d'au moins une paire de jonctions pn branchée en opposition est au moins approximativement symétrique.

15. Appareil électronique selon l'une des revendications précédentes, caractérisé en ce qu'entre la borne d'entrée du filtre (7) et la masse il y a au moins une résistance (73, 74).

16. Appareil électronique selon la revendication 15, caractérisée par une résistance (74) faiblement ohmique branchée entre la borne d'entrée du filtre (7) et la masse pour que la ligne correspondante (65, 66) soit fortement atténuée de préférence dans le cas limite de façon apériodique.

17. Appareil électronique selon la revendication 16, caractérisé par un condensateur (75) branché en série sur la résistance faiblement ohmique (74).

18. Appareil électronique selon la revendication 17, caractérisé en ce que le condensateur (75) est formé par deux diodes branchées en opposition.

19. Appareil électronique selon la revendication 18, caractérisé en ce que le condensateur (75) est formé par deux diodes branchées en opposition avec leur résistance interne sujette à fuite (figure 11).

20. Appareil électronique selon l'une des revendications précédentes, caractérisé par une ligne avec un revêtement résistant et capacitif comme composant du filtre (7).

21. Appareil électronique selon la revendication 6, caractérisé en ce que la tension de polarisation agissant dans le sens du blocage est formée à partir de la tension alternative d'entrée correspondant à la tension parasite, par l'intermédiaire d'une jonction pn fonctionnant comme diode.

22. Appareil électronique selon l'une des revendications précédentes, caractérisé en ce qu'au moins un composant (71) du filtre (7) est subdivisé en plusieurs segments (713, 714) pour réduire la diaphonie parasitaire.

23. Appareil électronique selon l'une des revendications précédentes, caractérisé en ce que les composants du filtre (7) sont logés dans au moins deux cuvettes (761, 762, 763) isolées l'une par rapport à l'autre, séparées, pour réduire la diaphonie parasitaire.

24. Appareil électronique selon la revendication 23, caractérisé en ce que les cuvettes (761, 762, 763) isolées les unes des autres sont reliées à la source de tension de polarisation par des réseaux de découplage indépendants (764, 765).

25. Appareil électronique selon la revendication 23, caractérisé en ce qu'au moins deux cuvettes (762, 763) isolées l'une par rapport à l'autre sont reliées par un réseau de découplage (766).

26. Appareil électronique selon l'une des revendications précédentes, caractérisé en ce que pour éviter les tensions redressées ou les courants redressés au moins un composant (71, 713-716, 74, 75) du filtre (7) est prévu sur au moins l'une des couches de recouvrement diélectrique (0071, 0072) du circuit intégré monolithique.

27. Appareil électronique selon la revendication 26, caractérisé en ce que les composants (715), prévus du côté de la borne d'entrée (66) du filtre (7), sont montés sur une couche de recouvrement diélectrique épaisse (0071), de préférence sur l'oxyde de champ pour obtenir une plus grande résistance au claquage.

28. Appareil électronique selon les revendications 26 ou 27, caractérisé en ce que pour obtenir un plus grand revêtement capacitif les composants (716), tournés vers le branchement d'entrée (66) du filtre (7), sont réalisés sur une couche de recouvrement (0072) diélectrique mince.

29. Appareil électronique selon au moins l'une des revendications précédentes, caractérisé par au moins un circuit limiteur de tension pour protéger les composants (715) du filtre (7) contre les tensions de claquage.

30. Appareil électronique selon la revendication 29, caractérisé par une diode Z comme circuit limiteur de tension.

31. Appareil électronique selon la revendication 30, caractérisé par une diode bipolaire Z (717) comme circuit limiteur de tension.

32. Appareil électronique selon la revendication 31, caractérisé en ce que la diode bipolaire Z (717) est une structure symétrique npn ou pnp (025, 017, 026).

33. Appareil électronique selon l'une des revendications 29-32, caractérisé par au moins une résistance (715) entre la borne d'entrée (66) du filtre (7) et le circuit limiteur de tension.

34. Appareil électronique selon au moins l'une des revendications précédentes, caractérisé par des condensateurs à couche de blocage adaptés à la tension à bloquer au moyen des gradients de dopage.
